(19) Europäisches Patentamt
European Patent Office
Office européen des brevets

(11) **EP 2 140 283 B1**

(12) **EUROPÄISCHE PATENTSCHRIFT**

(45) Veröffentlichungstag und Bekanntmachung des Hinweises auf die Patenterteilung:
**16.01.2013 Patentblatt 2013/03**

(21) Anmeldenummer: **08716173.3**

(22) Anmeldetag: **03.03.2008**

(51) Int Cl.:
*G01S 11/14* *(2006.01)*      *G01S 3/802* *(2006.01)*
*G01S 5/20* *(2006.01)*

(86) Internationale Anmeldenummer:
**PCT/EP2008/001651**

(87) Internationale Veröffentlichungsnummer:
**WO 2008/131824 (06.11.2008 Gazette 2008/45)**

(54) **VERFAHREN ZUM PASSIVEN BESTIMMEN VON ZIELDATEN**

METHOD FOR THE PASSIVE DETERMINATION OF TARGET DATA

PROCÉDÉ DE DÉTERMINATION PASSIVE DE DONNÉES CIBLES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.04.2007 DE 102007019444**

(43) Veröffentlichungstag der Anmeldung:
**06.01.2010 Patentblatt 2010/01**

(73) Patentinhaber: **ATLAS Elektronik GmbH**
**28309 Bremen (DE)**

(72) Erfinder:
• **STEIMEL, Ulrich**
**28876 Oyten (DE)**
• **STEINER, Hans-Joachim**
**28359 Bremen (DE)**

(74) Vertreter: **Wasiljeff, Johannes M.B.**
**Jabbusch Siekmann & Wasiljeff**
**Patentanwälte**
**Otto-Lilienthal-Strasse 25**
**28199 Bremen (DE)**

(56) Entgegenhaltungen:
EP-B- 1 410 060      DE-A1- 2 136 780
DE-C2- 3 446 658      DE-C2- 4 341 364
US-A- 4 910 719      US-B1- 6 668 218

• HINICH M J: "Passive range estimation using subarray parallax" JOURNAL OF THE ACOUSTICAL SOCIETY OF AMERICA USA, Bd. 65, Nr. 5, Mai 1979 (1979-05), Seiten 1229-1230, XP002487260 ISSN: 0001-4966

## Beschreibung

Die Erfindung betrifft ein Verfahren zum passiven Bestimmen von Zieldaten durch richtungsselektiven Empfang von Schallwellen der im Oberbegriff des Anspruchs 1 genannten Art.

Um ohne Eigenverrat von einem Trägerfahrzeug, z.B. einem Oberflächenschiff oder U-Boot, Position, Geschwindigkeit und Kurs eines Ziels, z.B. eines Oberflächenschiffs, U-Boots oder Torpedos als Zieldaten zu bestimmen, werden mit einer SonarEmpfangsanlage Schallwellen des Zielgeräusches empfangen und Peilwinkel zum Ziel gemessen. Aus diesen Peilwinkeln wird zusammen mit den Eigenpositionen des Trägerfahrzeugs eine Position des Ziels geschätzt und ein zugehöriger geschätzter Peilwinkel berechnet. Iterativ wird die Differenz zwischen dem gemessenen und dem geschätzten Peilwinkel solange verkleinert, bis eine Fehlergrenze unterschritten ist. Die zugrunde liegende geschätzte Position wird als Zielsposition erkannt.

Ausgehend von einer Anfangsposition des Ziels, die z.B. willkürlich als Startposition auf einem ersten Peilstrahl gewählt wird oder durch andere an Bord befindliche Sensoren bekannt ist, werden Positionen aus geschätzten x-y-Komponenten für das Ziel berechnet und daraus geschätzte Peilwinkel bestimmt. Das Trägerfahrzeug fährt für die Peilwinkelmessungen mit konstantem Kurs und konstanter Geschwindigkeit während einer vorgegebenen Zeitdauer und legt einen Weg zurück, der Eigenleg genannt wird. Für eine erste Bestimmung der Zieldaten ist es notwendig, dass das Trägerfahrzeug ein Manöver durchfährt und seinen Kurs oder seine Geschwindigkeit ändert und so ein neues Eigenleg aufmacht. Die nächsten Peilwinkelmessungen ermöglichen dann eine erste Zieldatenbestimmung.

Aus der EP 1 410 060 ist es bereits bekannt, ohne Manöver des Trägerfahrzeugs Zieldaten zu bestimmen, indem die richtungsselektiv zu Gruppensignalen zusammengefassten Empfangssignale der elektroakustischen Wandleranordnung einer Fourier-Transformation unterworfen und die Frequenzen von Spektrallinien im Frequenzspektrum der Gruppensignale bestimmt werden. Die Frequenz einer oder mehrerer zusammengefasster Spektrallinien wird als Empfangsfrequenz zusammen mit dem gemessenen Peilwinkel der Zieldatenschätzung zugrunde gelegt. Es werden Zielpositionen geschätzt und dazu geschätzte Peilwinkel ermittelt. Zwischen dem gemessenen und geschätzten Peilwinkel wird eine Peilwinkeldifferenz bestimmt. Außerdem wird aus den gleichen geschätzten Zielpositionen und ihren zeitlichen Änderungen eine Dopplerverschiebung und eine vom Ziel abgestrahlte oder ausgesendete Sendefrequenz geschätzt. Die geschätzte Sendefrequenz wird entsprechend der geschätzten Dopplerverschiebung frequenzverschoben und bildet die geschätzte Dopplerfrequenz von der die Empfangsfrequenz abgezogen wird. Der Unterschied zwischen Empfangsfrequenz und geschätzter Dopplerfrequenz wird als Differenzfrequenz zusammen mit der Peilwinkeldifferenz für die Bestimmung der Zieldaten nach dem Least-Square-Algoritmus verwendet.

Es ist Aufgabe der vorliegenden Erfindung, ein Verfahren der im Oberbegriff des Anspruchs 1 genannten Art zu schaffen, bei dem ohne Eigenmanöver und ohne Frequenzauswertung eine sichere und den taktischen Anforderungen zeitlich angepasste Bestimmung der Zieldaten möglich ist.

Diese Aufgabe wird erfindungsgemäß durch die Merkmale im Kennzeichenteil des Anspruchs 1 gelöst.

Die Peilwinkel zweier Wandleranordnungen an Bord eines Trägerfahrzeug, die einen Abstand zueinander aufweisen, werden miteinander kombiniert, wobei der Abstand zwischen den Wandleranordnungen sehr viel kleiner ist als die Reichweiten der zugehörigen Sonarempfangsanlagen, so dass sich die Peilwinkel zum Ziel nur unwesentlich voneinander unterscheiden. Die erste Wandleranordnung ist beispielsweise eine Zylinderbasis einer Passiv-Panoramaanlage, wie sie beispielsweise in der deutschen Patentschrift 2 136 780 beschrieben ist. Über benachbarte Richtcharakteristiken werden breitbandig Schallwellen empfangen und durch Vergleich von Gruppensignalen der Richtcharakteristiken ein Ziel detektiert und der Peilwinkel zum Ziel bestimmt. Sie befindet sich im Bug des Trägerfahrzeugs, zum Beispiel eines U-Boots.

Auf dem U-Boot sind außerdem für einen breitbandigen Empfang von Schallwellen längsseits Empfangsantennen eines so genannten PRS-Empfangssystems (Passiv-Range-Sonar), wie es beispielsweise aus der US-PS 4 910 719 bekannt ist, oder eines Flankarraysystems in einem Abstand zur Zylinderbasis installiert, die ebenfalls zum Peilen eines Ziels eingesetzt werden. Von demselben Trägerfahrzeug wird beispielsweise zusätzlich eine Schleppantenne gezogen, wie es beispielsweise in der DE 4 341 364 C2 beschrieben ist. Dort werden die verschiedenen Wandleranordnungen zur Seitenkennung der Peilergebnisse der Schleppantenne herangezogen.

In der vorliegenden Erfindung werden die Peilwinkel zweier Wandleranordnungen und der Abstand zwischen ihnen zu einem Peildreieck zum Ziel kombiniert, dessen Grundlinie dieser Abstand ist. Wird ein Ziel mit den beiden Wandleranordnungen detektiert, so ist die Entfernung zum Ziel um Größenordnungen größer als der Abstand zwischen den Wandleranordnungen. Der spitze Winkel am Zielort ist bei großen Entfernungen sehr klein, da die beiden Hauptempfangsrichtungen der Richtcharakteristiken nahezu parallel verlaufen. Die durch den Abstand der Wandleranordnungen entstehende Parallaxe wird erfindungsgemäß für die Schätzung der Entfernung zum Ziel genutzt, indem der Parallaxewert ermittelt und mit einem vorgebbaren Parallaxegrenzwert verglichen wird. Erst bei Überschreiten des Parallaxegrenzwerts liegt eine für die Ermittlung eines Zieldatensatzes sinnvolle Kreuzpeilung vor, so dass die Schätzung von Zielkurs, Entfernung zum Ziel und Zielgeschwindigkeit durch die Peilwinkel der zweiten Wandleranordnung ermöglicht wird. Diese Kreuzpeilung erübrigt ein Eigenmanöver, die Kenntnis einer Startposition des Ziels und die frequenzmäßige Auswertung der zu Gruppensignalen zusammengefassten Empfangssignale. Die benötigte zweite Wandleranordnung ist ohnehin an Bord des Trägerfahrzeugs und ebenfalls die Signalverarbeitung ihrer Empfangssignale für eine Peilung zum Ziel.

Durch den Parallaxegrenzwert wird ein Ortungsgebiet seitlich vom Trägerfahrzeug aufgespannt, das einerseits von den schiffsrelativen, maximal möglichen Peilwinkelstrahlen der Hauptempfangsrichtungen beider Wandleranordnungen und andererseits von einer durch den Parallaxegrenzewert maximal zugelassenen Entfernung oder Grenzentfernung begrenzt wird. Der Parallaxegrenzwert entspricht einem Grenzwinkel eines Peildreiecks, das durch den Peilwinkel, den Abstand der Wandleranordnungen und die Grenzentfernung zum Ziel gebildet wird. Diese Grenzentfernung dient als Vergleichsentfernung, um geschätzte Entfernungen zum Ziel ausschließen zu können, wenn sie nicht im Ortungsgebiet liegen.

Durch die Vorgabe des Parallaxegrenzwerts und der Vergleichsentfernung werden Zieldatensätze ausgegeben, die ohne Eigenmanöver konvergieren und insbesondere im Entfernungsnahbereich des U-Boots als zuverlässig zu beurteilen sind. Je näher das Ziel ist, desto größer ist der Parallaxewert und die Genauigkeit der Entfernungsschätzungen.

Zweckmäßige Ausführungsformen des erfindungsgemäßen Verfahrens und vorteilhafte Weiterbildungen und Ausgestaltungen ergeben sich aus den weiteren Ansprüchen.

Der Parallaxewert zwischen den Peilungen der beiden beteiligten Wandleranordnungen wird durch Bilden eines gleitenden Mittelwerts der Differenzen der von den beiden Wandleranordnungen gemessenen Peilwinkel bestimmt. Damit werden Streuungen bei der Messung der Peilwinkel ausgeglichen.

Zur Berechnung des Parallaxegrenzwertes werden die Standardabweichungen der Peilwinkelmessungen jeder Wandleranordnung fortlaufend bestimmt, quadriert, summiert, radiziert und mit einem Faktor c multipliziert und durch die radizierte Anzahl der Peilwinkelmessungen pro Verarbeitungszyklus der Zieldatenschätzung geteilt. Der Faktor c beträgt vorzugsweise c = 1,8. Der Verarbeitungszyklus beträgt beispielsweise 20 Sekunden. Mit der dynamischen Bestimmung des Parallaxegrenzwerts wird der Abhängigkeit der Genauigkeit der Schätzung der Zieldaten von den Streuungen der Peilwinkelmessungen Rechnung getragen.

Mit jeder neuen Peilwinkelmessung der beteiligten Wandleranordnungen wird ein neuer Zieldatensatz geschätzt. Ein Vergleich mit den in den vorherigen Verarbeitungszyklen geschätzten Zielentfernungen sagt etwas über die Stabilität der Schätzung aus. Zum Vergleich wird eine Gerade durch eine vorgebbare Anzahl von geschätzten Entfernungen gelegt und die Entfernungsdifferenzen der geschätzten Entfernungen von der Geraden ermittelt. Durch einen Vergleich des Mittelwerts der Entfernungsdifferenzen mit einem vorgebbaren Grenzwert oder eine Bestimmung der Standardabweichung der geschätzten Entfernungen und der Vergleich mit einem vorgebbaren Stabilitätsmaß erhält man zusätzlich ein Stabilitätskriterium für die Schätzung der Zieldaten und deren Glaubwürdigkeit.

Während der Peilwinkelmessungen werden fortlaufend der Parallaxewert, die Entfernung zum Ziel sowie deren Stabilität geschätzt. Ferner werden der Parallaxegrenzwert sowie die zugehörige Vergleichsentfernung bestimmt. Sobald der Parallaxewert den Parallaxegrenzwert überschreitet, die geschätzte Entfernung unterhalb der Vergleichsentfernung liegt und die geschätzten Entfernungen zum Ziel eine gewisse Stabilität aufweisen, wird neben der immer ausgegebenen Peilung auch der weitere zugehörige Zieldatensatz, nämlich Kurs, Geschwindigkeit und die Entfernung zum Ziel ausgegeben.

Ist die geschätzte Entfernung gleich oder kleiner als eine vorgebbare Mindestentfernung, befindet sich das Ziel im unmittelbaren Nahbereich des U-Boots als Trägerfahrzeug. In diesem Fall ist eine zusätzliche Warnung bei der Ausgabe der Zieldaten für den Einsatz und Schutz des Trägerfahrzeugs von großem Vorteil.

Bei einer geringen Standardabweichung der geschätzten Entfernung, die eine stabile Schätzung kennzeichnen, wird die Anzahl der für die Zieldatenschätzung zu berücksichtigenden Peilwinkelmessungen verkleinert. Der Vorteil besteht darin, dass auch die Zieldaten von Zielen, die nicht auf einem geradlinigen unbeschleunigten Kurs laufen, sicher geschätzt werden können, da die Messabschnitte und damit die Verarbeitungszyklen für die Zieldatenschätzung entsprechend kurz sind und in diesen kurzen Abschnitten das Ziel geradlinig mit konstanter Geschwindigkeit fährt. Dies gilt besonders bei einem Zielmanöver oder bei einem mit großer Geschwindigkeit anlaufenden Ziel. Bei Verkleinerung der Anzahl der zu berücksichtigenden Peilwinkelmessungen wird außerdem der Parallaxegrenzwert entsprechend höher und die Vergleichsentfernung niedriger angesetzt. Mit diesen Maßnahmen ist eine robuste Zieldatenermittlung in Gefahrensituationen möglich.

Der Vorteil des erfindungsgemäßen Verfahrens besteht in der jeweiligen Anpassung der Ermittlung des Parallaxewerts, des Parallaxegrenzwerts und der Vergleichsentfernung an die Zieldatenermittlung und deren Stabilität.

Die Erfindung ist anhand eines Ausführungsbeispiels für ein Verfahren zum passiven Bestimmen von Zieldaten näher beschrieben. Es zeigen:

Fig. 1    ein Peildreieck,

Fig. 2    ein Blockschaltbild mit zwei Wandleranordnungen,

Fig. 3    ein Szenarium, mit Peilungen von einem Trägerfahrzeug zu einem Ziel,

Fig. 4    ein zu dem Szenarium gemäß Fig. 3 gehöriger zeitlicher Verlauf des Parallaxewerts,

Fig. 5    ein Zeitdiagramm der Entfernungsschätzung bei einem Szenarium gemäß Fig. 3 und

Fig. 6    ein funktionaler Zusammenhang von Vergleichsentfernung und Peilwinkel.

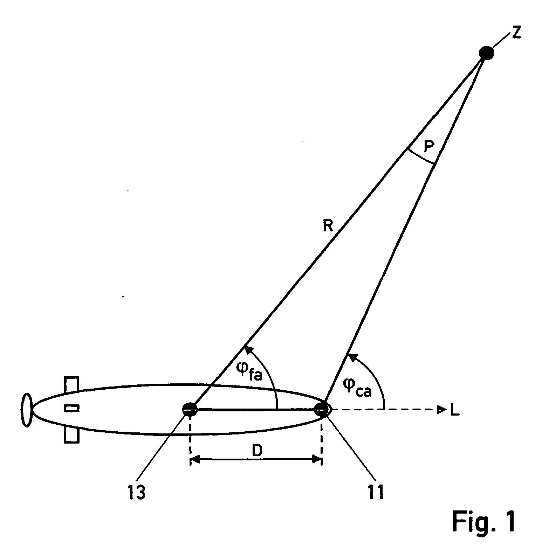

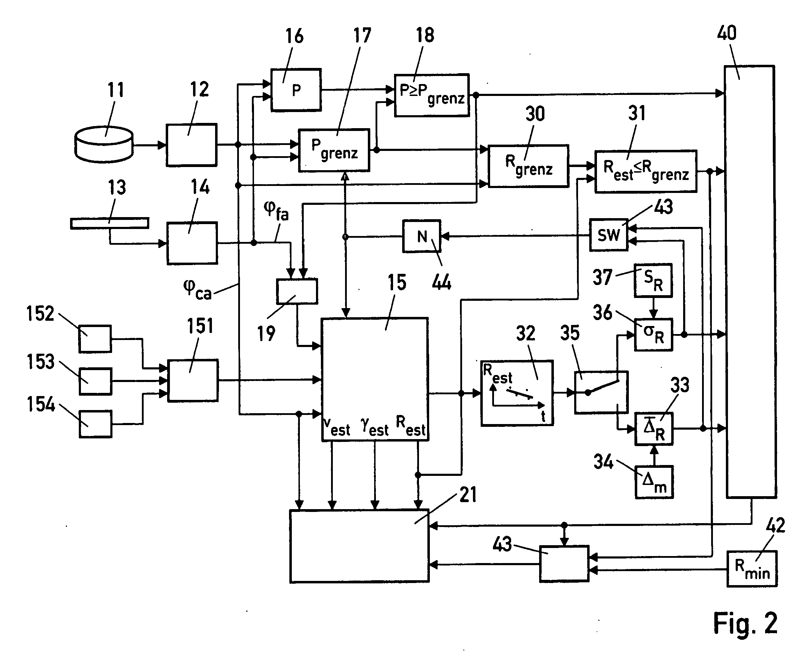

An Bord eines U-Boots befindet sich im Bug eine erste Wandleranordnung mit elektroakustischen Wandlern in Form einer Zylinderbasis 11, wie sie in den Fig. 1 und 2 gezeigt wird. Die Empfangssignale der Zylinderbasis 11 werden in einer Sonarempfanganlage in Form einer Passiv-Panoramaanlage zu Gruppensignalen benachbarter Richtcharakteristiken in einem Richtungsbildner 12 zusammengefasst, die rundum richtungsselektiv entsprechend der Hauptempfangsrichtungen der Richtcharakteristiken Schall empfangen. Die Hauptempfangsrichtungen weisen senkrecht zu jeweils um einen Wandler versetzte Sehnen eines mit Wandlern besetzten Kreisbogens der Zylinderbasis 11, indem die Empfangssignale der elektroakustischen Wandler entsprechend ihrem Abstand vom Kreisbogen zur Sehnen laufzeit- oder phasenverzögert werden und zu Gruppensignalen aufaddiert werden. Mit der Zylinderbasis 11 wird gemäß Fig. 1 ein Ziel Z unter einem schiffsbezogenen Peilwinkel $\varphi_{ca}$ detektiert. Die Längsachse L des U-Boots ist die Bezugsachse für die Peilwinkel $\varphi_{ca}$.

Mit einer im Abstand D zum Wandlerposition der ersten Wandleranordnung angeordneten zweiten Wandleranordnung in Form einer Seitenantenne 13, eines sog. Flank Array, wird das gleiche Ziel Z unter einem Peilwinkel $\varphi_{fa}$ gepeilt. Die Empfangssignale der Seitenantenne 13 werden dazu in einem zweiten Richtungsbildner 14 entsprechend unterschiedlichen virtuellen Schwenkungen der Seitenantenne 13 verzögert und zu Gruppensignalen addiert, so dass ein Fächer von Richtcharakteristiken aufgespannt wird, deren benachbarte Hauptempfangsrichtungen einen Sektor seitlich zum U-Boot abdecken. Mit der Seitenantenne 13 wird das Ziel Z unter einem Peilwinkel $\varphi_{fa}$, bezogen auf die Längsrichtung L, gepeilt. Die Peilwinkel $\varphi_{ca}$ und $\varphi_{fa}$ bilden zusammen mit dem Abstand D ein Peildreieck, an dessen Spitze das Ziel Z liegt. Die Entfernung R zum Ziel Z ist sehr viel größer als der Abstand D der beiden Wandleranordnungen, die Peilwinkel $\varphi_{ca}$ und $\varphi_{fa}$ sind nahezu gleich und unterscheiden sich nur um einen Parallaxewert P.

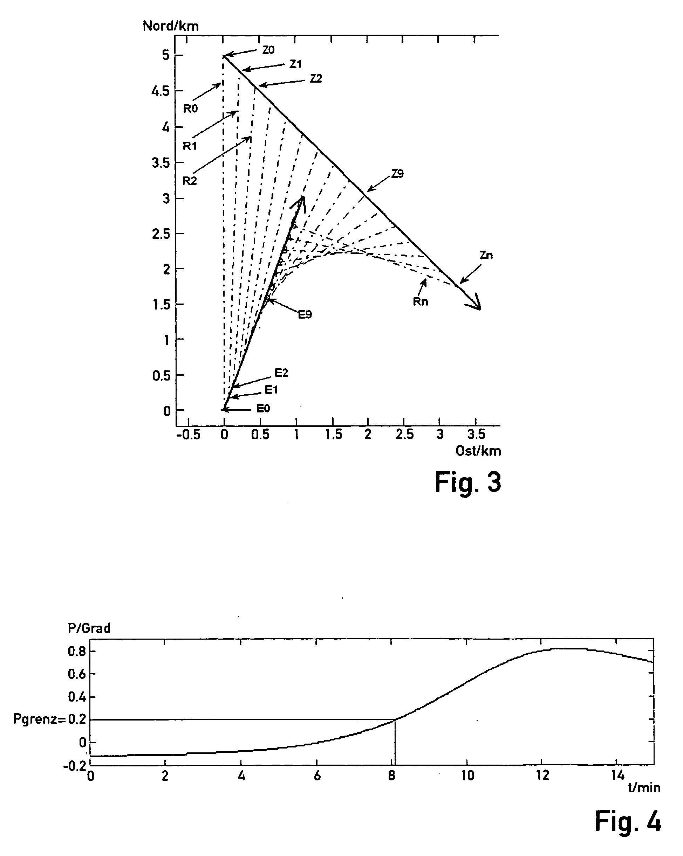

An Bord des U-Boots befindet sich in der Sonarempfangsanlage der Zylinderbasis 11 ein Schätzfilter 15 zum passiven Bestimmen von Zieldaten aus Peilwinkeln $\varphi_{cal}$, $\varphi_{ca2}$, ... $\varphi_{can}$, die bei konstanter Fahrt des U-Boots längs eines sog. Eigenlegs an Eigenpositionen des U-Boots $E_0$, $E_1$, ..., $E_n$ zum Ziel Z gemessen werden, während sich das Ziel Z mit konstanter Geschwindigkeit v auf einem Zielkurs $\gamma$ von der Zielposition $Z_0$ bis zu der Zielposition $Z_n$ bewegt, wie Fig. 3 in einem rechtwinkligen Nord-Ost-Koordinatensystem mit Kilometereinteilung zeigt, dessen Ursprung die Eigenposition $E_0$ ist. Die Entfernungen zum Ziel $R_0$, $R_1$, ... $R_n$ sind ebenfalls Fig. 3 zu entnehmen.

Im Schätzfilter 15, das beispielsweise in der DE-PS 3 446 658 beschrieben ist, können erste Zieldaten aus Peilwinkeln $\varphi_{ca}$ erst dann ermittelt werden, wenn das U-Boot ein Eigenmanöver fährt und auf seinem zweiten Eigenleg unter einem Winkel zum ersten Eigenleg oder mit veränderter Geschwindigkeit seine Fahrt fortsetzt. Die auf dem zweiten Eigenleg gemessenen Peilwinkel werden nunmehr zusammen mit den auf dem ersten Eigenleg gemessenen Peilwinkeln verknüpft und erlauben eine Schätzung der Entfernung zum Ziel, indem Peilwinkeldifferenzen nach dem Prinzip der kleinsten Fehlerquadrate iterativ minimiert werden. Im Schätzfilter 15 werden dazu die geschätzten Peilwinkel aus der jeweils nächsten geschätzten Position des Ziels ermittelt, die durch Vorgabe einer geschätzten Geschwindigkeit und eines geschätzten Kurses vom Ziel als nächste Zielposition eingenommen wird. Wenn die Summe der Peilfehler zwischen den geschätzten und gemessenen Peilwinkeln einen vorgebbaren Fehler unterschreitet, ist die bestmögliche Schätzung der Zielparameter, Entfernung, Kurs und Geschwindigkeit erkannt.

Das Schätzfilter 15 benutzt zum Schätzen der Zieldaten zu jeder Peilmessung einer Wandleranordnung die entsprechende Wandlerortsposition zur Messzeit des Peilwinkels. Diese Wandlerortspositionen werden in einem Positionsrechner 151 aus der von einer integrierten Navigationsanlage 152 berechneten Eigenposition des U-Boots mit Hilfe einer Inertialplattform, aus der mit einem Kompass 153 aktuell ermittelten Längsrichtung L des U-Boots sowie den Distanzen der Einbauorte der Wandleranordnungen zu dem Einbauort der Inertialplattform ermittelt. Die exakten Einbauorte sind als Distanzen zur Längs- und Querrichtung des U-Boots in einem Speicher 154 in Tabellen abgelegt, die von der Werft erstellt und geliefert werden.

Statt eines Manövers des Trägerfahrzeugs werden zum Ermitteln der Zieldaten im Schätzfilter 15 erfindungsgemäß Peilwinkel $\varphi_{fa}$ einer zweiten Wandleranordnung und ein geschätzter Parallaxewert berücksichtigt. Durch Differenzbildung der beiden gemessenen Peilwinkel $\varphi_{ca}$ und $\varphi_{fa}$ wird der Parallaxewert P, den Fig. 1 zeigt, geschätzt. Dazu wird in einem Parallaxerechner 16 ein gleitendes Mittelwertfenster über eine vorgebbare Menge M von Differenzbildungen gelegt, d. h. bei einer Datenrate von z.B. 1Hz werden dazu 60 Differenzen verwendet:

$$P = \left| \frac{1}{M} \sum_{i=1}^{M} (\varphi_{cai} - \varphi_{cai}) \right| \qquad (1)$$

Der geschätzte Parallaxewert P wird mit einem in einem Parallaxegrenzwertrechner 17 berechneten Parallaxegrenzwert $P_{Grenz}$ verglichen. Der Parallaxegrenzwert $P_{Grenz}$ kennzeichnet ein Peildreieck, dessen spitzer Winkel deutlich eine Nichtparallelität der Peilstrahlen von der Zylinderbasis 11 und der Seitenantenne 13 gemäß Fig. 1 erkennen lässt. Dieser Parallaxegrenzwert $P_{Grenz}$ wird aus den geschätzten Streuungen $\sigma\varphi_a$, $\sigma_{fa}$ der Peilwinkelmessungen mit der Zylinderbasis 11 und der Seitenantenne 13 von einer Anzahl $N_{ca}$ bzw. $N_{fa}$ der während eines Verarbeitungszyklus zum Schätzen eines Zieldatensatzes gemessenen Peilwinkel bestimmt:

$$P_0 = \frac{1,8 \cdot \sqrt{\sigma\varphi_{ca}{}^2 + \sigma\varphi_{fa}{}^2}}{\sqrt{N_{ca} + N_{fa}}} \qquad (2)$$

Ein Verarbeitungszyklus dauert beispielsweise 20 Sekunden.

In einer nachgeordneten Vergleichsschaltung 18 wird der geschätzte Parallaxewert P mit dem berechneten Parallaxegrenzwert $P_{Grenz}$ verglichen. Wenn der Parallaxewert P gleich oder größer als der Parallaxegrenzwert $P_{Grenz}$ ist, werden über ein Tor 19 die Peilwinkelmessungen $\varphi_{fa}$ der Seitenantenne 13 an das Schätzfilter 15 durchgeschaltet und die gemessenen Peilwinkel $\varphi_{fa}$ der zweiten Wandleranordnung zusammen mit den gemessenen Peilwinkel $\varphi_{ca}$ der ersten Wandleranordnung zum Schätzen der Zieldaten verwendet.

Fig. 4 zeigt den zeitlichen Verlauf des Parallaxewerts für eine Fahrt des Trägerfahrzeugs vom Startpunkt $E_0$ längs seines Eigenlegs gemäß Fig. 3. Bei einem Abstand D=30m der beiden Wandleranordnungen, einer Anzahl N=20 von Peilwinkelmessungen pro Wandleranordnung und einer jeweiligen Streuung der Peilwinkelmessungen von $\sigma_{ca}$ = $\sigma_{fa}$ = 0,5° ergibt sich der Parallaxegrenzwert zu $P_{Grenz}$ = 0.2°. Am Anfang der Messfahrt ist der Parallaxewert P wegen der großen Entfernung $R_0$ zum Ziel sehr klein, wie Fig. 3 zeigt. Im weiteren Verlauf nähern sich U-Boot und Ziel und der Parallaxewert P steigt. Nach gut 8 Minuten ist der Parallaxegrenzwert $P_{Grenz}$ = 0,2° überschritten und die Peilwinkelmessungen mit der Seitenantenne 13 am Ausgang des Richtungsbildners 14 werden über das Tor 19 an das Schätzfilter 15 durchgeschaltet.

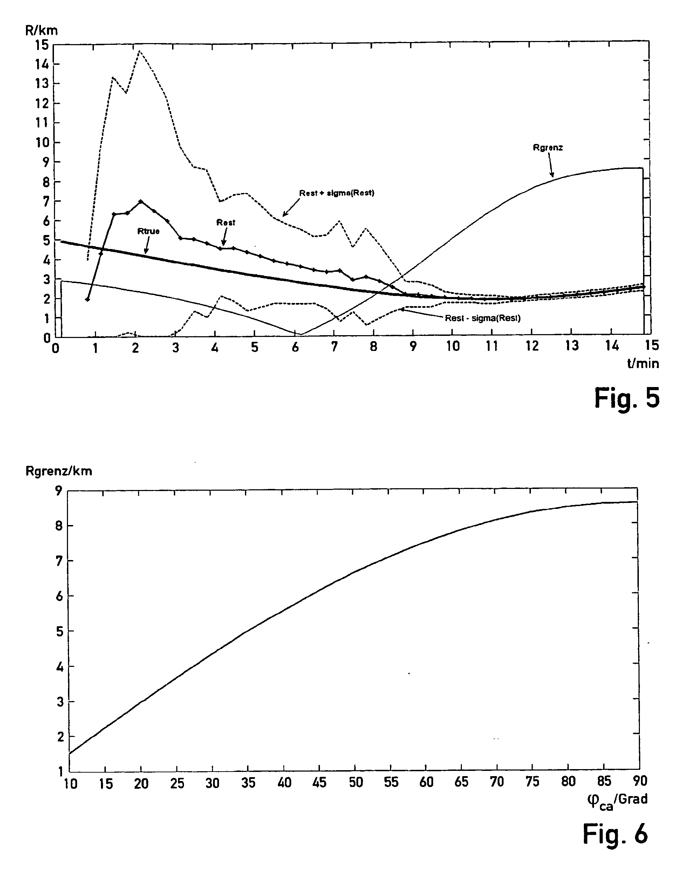

Mit Hilfe des in Fig. 1 gezeigten Peildreiecks wird der zeitliche Verlauf einer Grenz- oder Vergleichsentfernung $R_{Grenz}$ unter Berücksichtigung des gemessenen Peilwinkels $\varphi_{ca}$ entsprechend Fig. 3 für einen Parallaxegrenzwert $P_{Grenz}$ = 0.2° berechnet. Fig. 5 zeigt den zeitlichen Verlauf der Vergleichsentfernung $R_{Grenz}$ zusammen mit der geschätzten Entfernung $R_{est}$. Nach gut 8 Minuten ist die geschätzte Entfernung $R_{est}$ unterhalb der Vergleichsentfernung $R_{Grenz}$ und der geschätzte Zieldatensatz kann zur Anzeige gebracht werden.

Die Vergleichsentfernung $R_{Grenz}$ wird in einem Entfernungsrechner 30 berechnet:

$$R_{Grenz} = D \cdot \frac{\sin \varphi_{ca}}{\sin P_{Grenz}} \qquad (3).$$

Der Entfernungsrechner 30 ist eingangsseitig mit dem Peilwinkel $\varphi_{ca}$ aus dem Richtungsbildner 12 und dem Parallaxegrenzwert $P_{Grenz}$ aus dem Parallaxegrenzwertrechner 17 beaufschlagt. In einer Entfernungsvergleichsstufe 31 wird die Vergleichsentfernung $R_{Grenz}$ mit der geschätzten Entfernung $R_{est}$ aus dem Schätzfilter 15 verglichen. Für $R_{est} \geq R_{Grenz}$ wird eine Logikschaltung 40 angesteuert, die eingangsseitig ebenfalls mit der Vergleichsschaltung 18 verbunden ist. Der geschätzte Zieldatensatz, bestehend aus der Entfernung zum Ziel Z, der Geschwindigkeit v des Ziels Z und dem Kurs $\gamma$ des Ziels Z, wird durch ein Steuersignal am Ausgang der Logikschaltung 20 zur Anzeige auf einer Lagedarstellung 21 freigegeben, wenn die Logikschaltung 40 gleichzeitig steuernde Signale von den Ausgängen der Vergleichsschaltung 18 und der Entfernungsvergleichsschaltung 31 erhält.

Dieser Zeitpunkt zur Freigabe der Anzeige entspricht der Eigenposition $E_9$ des U-Boots und der Position $Z_9$ des Ziels in Fig. 3. Das Ziel Z hat sich in etwas über 8 Minuten von seiner Startposition $Z_0$ mit der Geschwindigkeit v bis zur Zielposition $Z_9$ auf einem Kurs $\gamma$ geradlinig bewegt. Zu diesem Zeitpunkt beträgt die Entfernung Rest = 2,2km zwischen U-Boot und Ziel Z. Der Verlauf des Parallaxewerts P in Fig. 4 und der Vergleichsentfernung $R_{Grenz}$ in Fig. 5 zeigen, dass alle folgenden Zieldatenschätzungen durch die Peilwinkel $\varphi_{fa}$ der zweiten Wandleranordnungen gestützt werden können und kein Eigenmanöver gefahren werden muss.

Die Zieldaten werden beispielsweise alle 20 Sekunden neu geschätzt. Führt man für das in Fig. 3 dargestellte Szenarium Monte-Carlo-Simulationsläufe durch, so erhält man das in Fig. 5 dargestellte Einlaufverhalten der Zieldatenschätzung für die Entfernung R zum Ziel Z. Die wahre Entfernung $R_{true}$ zum Ziel Z zeigt die Kurve, die durchgezogen in Fig. 5 eingezeichnet ist. Zur Zeit t=0 beträgt die wahre Entfernung Rtrue = 5km. Die Kurve Rest in Fig. 5 gibt den Mittelwert der jeweils in dieser Zeit erfolgten Entfernungsschätzungen an. Die gestrichelten Kurven $R_{est} + \sigma_R$ und $R_{est} - \sigma_R$ oberhalb und unterhalb des Verlaufs von Rest geben die Standardabweichungen der Entfernungsschätzungen der verschiedenen Monte-Carlo-Läufe an. Nach 0,8 Minuten wird pro Monte-Carlo-Lauf der ersten Entfernungswert geschätzt, so dass dann auch der ersten Mittelwert der geschätzten Entfernung Rest zur Verfügung steht. Mit zunehmender Zeit nähert sich die Kurve für Rest mit immer kleiner werdender Streuung der Kurve für die wahre Entfernung Rtrue an.

In einer Regressionsschaltung 32 werden Entfernungsdifferenzen $\Delta R_i$ der geschätzten Entfernungen Rest zu einer durch die geschätzten Entfernungen Rest gelegten Geraden ermittelt, in einem Mittelwertbildner 33 gemittelt und mit einem in einem Geber 34 vorgebbaren Grenzwert $\Delta m$ verglichen. Der Ausgang des Mittelwertbildners 33 ist ebenfalls mit einem Eingang der Logikschaltung 40 verbunden. Wenn die Entfernungsdifferenzen kleiner als der Grenzwert $\Delta m$ sind, wird die Logikschaltung 40 angesteuert.

Wahlweise über einen Schalter 35 werden Entfernungs-Standardabweichungen $\sigma_R$ der Entfernungsschätzung in einer Rechnerschaltung 36 bestimmt und mit einem Stabilitätsmaß $S_R$ aus einer Vorgabeschaltung 37 verglichen, die ebenfalls mit einem Eingang der Logikschaltung 40 verbunden ist. Wenn die Entfernungs-Standardabweichung $\sigma_R$ kleiner oder gleich dem Stabilitätsmaß $S_R$ ist, wird die Logikschaltung 40 angesteuert. Für das in Fig. 3 gezeigte Szenarium ist das Stabilitätsmaß $S_R$ nach 9 Minuten erreicht, die geschätzte Entfernung $R_{est}$ beträgt dann 2km (siehe Fig. 5).

Für eine zusätzliche Warnanzeige ist die Logikschaltung 40 ausgangsseitig mit einer weiteren Vergleichsstufe 41 verbunden, die eingansseitig mit der Entfernungsvergleichsstufe 31 verbunden ist. Sobald die Logikschaltung 40 am Ausgang ein Signal zur Anzeige des Zieldatensatzes an die Lagedarstellung 21 abgibt, wird die Vergleichsstufe 41 aktiviert. Die geschätzte Entfernung Rest wird mit einer in einem Geber 42 vorgebbaren Minimalentfernung $R_{min}$ verglichen. Falls die geschätzte Entfernung $R_{est}$ kleiner als die Minimalentfernung $R_{min}$ ist, wird durch das Ausgangssignal der Vergleichsstufe 41 die Warnanzeige auf der Lagedarstellung 21 aktiviert, da sich ein Ziel in einem Umkreis mit einem Radius, der kleiner als die Minimalentfernung $R_{min}$ ist, zum Eigenboot befindet und eine Gefahr für die Bootssicherheit bedeuten kann. Diese Situation ergibt sich gemäß Fig. 5 bei einer vorgegebenen Minimalentfernung $R_{min}$ = 2,0km nach 10,8 Minuten, als sich das Ziel in einer geschätzten Entfernung von $R_{est}$ = 1, 8km vom U-Boot befindet. Ab da ist die Entfernungsstandardabweichung $\sigma_R$ stets kleiner als das Stabilitätsmaß $S_R$.

Dem Mittelwertbildner 33 und der Rechnerschaltung 16 ist eine Schwellenschaltung 43 nachgeordnet, die bei Unterschreiten des Stabilitätsmaßes $S_R$ in der Rechnerschaltung 36 oder bei Unterschreiten des Grenzwerts $\Delta m$ im Mittelwertbildner 33 eine Vorgabeschaltung 44 zur Vorgabe der Anzahl $N_{ca}$ und $F_{ca}$ der für die Peilwinkelmessung je Verarbeitungszyklus verwendeten Peilwinkelmessungen ansteuert und auf kleinere Werte einstellt. Die Vorgabeschaltung 44 ist ausgangsseitig mit dem Schätzfilter 15 und dem Parallaxegrenzwertrechner 17 verbunden. Der parallaxegrenzwert $P_{Grenz}$ wird dann gemäß Gl.(2) vergrößert und der Verarbeitungszyklus im Schätzfilter 15 zeitlich verkürzt.

Fig. 6 zeigt den Zusammenhag zwischen dem schiffsbezogenen Peilwinkel $\varphi_{ca}$ und der Vergleichsentfernung $R_{Grenz}$ für einen Parallaxegrenzwert $P_{Grenz}$ von 0,2° und einen Abstand D = 30m zwischen den beiden Wandleranordnungen. In dem Szenarium gemäß Fig. 3 befindet sich das Ziel zu Beginn der Messfahrt in einer Entfernung von $R_0$ = 5km. In den ersten 6 Minuten ändert sich der schiffsbezogene Peilwinkel $\varphi_{ca}$ von 20° auf 0°, die Entfernung wird kleiner und die Vergleichsentfernung $R_{Grenz}$ geht in diesem Winkelbereich von 3km auf 0 km zurück.

Danach steigt der schiffsbezogene Peilwinkel $\varphi_{ca}$ von 0° auf 90°, die Entfernung R zum Ziel Z wird wieder kleiner. Die Vergleichsentfernung $R_{Grenz}$ steigt für diese Peilwinkel auf Werte bis zu 8,5km.

Nach gut 8 Minuten beträgt der Peilwinkel $\varphi_{ca}$ = 17° (Fig. 3), der Parallaxewert P ist größer als der Parallaxegrenzwert $P_{Grenz}$ = 0,2° (Fig. 4), die geschätzte Entfernung $R_{est}$ zum Ziel Z ist gleich der Grenzentfernung $R_{Grenz}$ = 2, 5km (Fig. 5) und die Stabilität der Entfernungsschätzung ist ausreichend (Fig. 5). Der Zieldatensatz wird auf der Lagedarstellung 21 zur Anzeige gebracht, obwohl das Eigenboot noch kein Eigenmanöver durchgeführt hat.

**Patentansprüche**

1. Verfahren zum passiven Bestimmen von Zieldaten durch richtungsselektiven Empfang von Schallwellen, die von einem Ziel abgestrahlt oder gesendet werden, mit einer ersten elektroakustischen Wandleranordnung einer Sonarempfangsanlage, insbesondere einer Passiv-Panoramaanlage, auf einem Trägerfahrzeug aus geschätzten Peilwinkeln, die aus geschätzten Positionen des Ziels ermittelt werden, und gemessenen Peilwinkeln, wobei die Peilwinkeldifferenz zwischen gemessenen und geschätzten Peilwinkeln iterativ minimiert wird, **dadurch gekennzeich-**

net, dass Peilwinkel ($\varphi_{fa}$) einer zweiten an Bord des Trägerfahrzeugs befindlichen in einem bekannten Abstand zur ersten Wandleranordnung eingebauten elektroakustischen Wandleranordnung gemessen werden, dass die gemessenen Peilwinkel ($\varphi_{ca}$, $\varphi_{fa}$) beider Wandleranordnungen, die auf die Längsachse (L) des Trägerfahrzeugs bezogen werden, unter Berücksichtigung ihres Abstands (D) zueinander zu einem Peildreieck zum Ziel (Z) kombiniert werden und ein spitzer Winkel zum Zielort als Parallaxewert (P) ermittelt wird, dass der Parallaxewert (P) mit einem vorgebbaren Parallaxegrenzwert ($P_{Grenz}$) verglichen wird, dass aus dem Parallaxegrenzwert ($P_{Grenz}$), dem Abstand (D) und dem gemessenen Peilwinkel ($\varphi_{ca}$) einer der beiden Wandleranordnungen eine Vergleichsentfernung ($R_{Grenz}$) ermittelt wird, die geschätzte Zielentfernung ($R_{est}$) mit der Vergleichsentfernung ($R_{Grenz}$) verglichen wird, dass bei gleichzeitigem Überschreiten des Parallaxegrenzwerts und Unterschreiten der Vergleichsentfernung ($R_{Grenz}$) alle Zieldaten, nämlich Zielkurs ($\gamma$), Entfernung (R) zum Ziel und Zielgeschwindigkeit (v), als Zieldatensatz ausgegeben werden.

2. Verfahren nach Anspruch 1, **dadurch gekennzeichnet, dass** der Parallaxewert (P) durch Mittelung einer vorgebbaren Menge (M) von Differenzen der von den beiden Wandleranordnungen gemessenen Peilungen ($\varphi_{ca}$, $\varphi_{fa}$) ermittelt wird.

3. Verfahren nach Anspruch 1 oder 2, **dadurch gekennzeichnet, dass** die Eigenposition (E) des Trägerfahrzeugs mit einer Navigationsanlage ( ), seine Längsrichtung (L) mit einem Kompass ( ) und der Abstand (D) der Wandleranordnungen aus ihren Wandlerortspositionen bestimmt werden, wobei die Wandlerortspositionen über deren bekannte Einbauorte mit Bezug auf die Längs- und Querachse ermittelt werden, und Grundlage für die Angabe der Zieldaten als Zieldatensatz bilden.

4. Verfahren nach einem oder mehreren der Ansprüche 1 bis 3, **dadurch gekennzeichnet, dass** für die Bestimmung des Parallaxegrenzwerts ($P_{Grenz}$) die Streuung ($\sigma\varphi_{ca}$,$\sigma\varphi_{fa}$) oder Standardabweichung der zur Bestimmung eines Zieldatensatzes gemessenen Peilwinkel ($\varphi_{ca}$, $\varphi_{fa}$) der beiden Wandleranordnungen ermittelt, die radizierte Summe der Quadrate der Streuungen ($\sigma\varphi_{ca}$,$\sigma\varphi_{fa}$) oder Standardabweichungen mit einem Faktor c, vorzugsweise c=1,8, multipliziert, und durch die radizierte Anzahl ($N_{fa}$, $N_{ca}$) der Peilwinkelmessungen pro Verarbeitungszyklus zur Schätzung eines Zieldatensatzes geteilt wird und dass der Parallaxegrenzwert ($P_{Grenz}$) mit dem ermittelten Parallaxewert (P) für die Ausgabe des Zieldatensatzes verglichen wird.

5. Verfahren nach einem oder mehreren der Ansprüche 1 bis 4, **dadurch gekennzeichnet, dass** die Entfernungs-Standardabweichung ($\sigma_R$) der geschätzten Entfernungen ($R_{est}$) zu Ziel (Z) ermittelt und mit einem vorgebbaren Stabilitätsmaß ($S_R$) verglichen wird, dass bei Unterschreiten des Stabilitätsmaßes ($S_R$) die Ausgabe des Zieldatensatzes freigegeben wird.

6. Verfahren nach Anspruch 5, **dadurch gekennzeichnet, dass** eine Gerade durch eine vorgebbare Zahl von geschätzten Entfernungen (Rest) zum Ziel (Z) gelegt wird und Entfernungsdifferenzen ($\Delta R$) der geschätzten Entfernungen ($R_{est}$) von der Geraden bestimmt werden, dass aus den Entfernungsdifferenzen ($\Delta R$) die Entfernungs-Standardabweichung ($\sigma_R$) der Entfernung ermittelt wird.

7. Verfahren nach einem der Ansprüche 1 bis 4, **dadurch gekennzeichnet, dass** eine Gerade durch eine vorgebbare Zahl von geschätzten Entfernungen ($R_{est}$) zum Ziel (Z) gelegt wird und Entfernungsdifferenzen ($\Delta R$) der geschätzten Entfernungen ($R_{est}$) von der Geraden bestimmt werden und dass für die Ausgabe des Zieldatensatzes der Mittelwert der Entfernungsdifferenzen ($\Delta R$) mit einem vorgebbaren Grenzwert ($\Delta m$) verglichen wird und bei Unterschreiten des Grenzwertes ($\Delta m$) die Ausgabe des Zieldatensatzes freigegeben wird.

8. Verfahren nach einem der Ansprüche 1 bis 7, **dadurch gekennzeichnet, dass** die geschätzte Entfernung ($R_{est}$) des ausgegebenen Zieldatensatzes mit einer vorgebbaren Minimalentfernung ($R_{min}$) verglichen wird und bei Unterschreiten der Minimalentfernung ($R_{min}$) eine Warnung wegen Gefährdung der Bootssicherheit angezeigt wird.

9. Verfahren nach einem der Ansprüche 4 bis 8, **dadurch gekennzeichnet, dass** bei Unterschreiten des Stabilitätsmaßes ($S_R$) oder des Grenzwerts ($\Delta m$) unter eine vorgebbare Schwelle die Anzahl ($N_{ca}$, $N_{fa}$) der für die Bestimmung der Zieldaten verwendeten Peilwinkelmessungen verkleinert wird, wobei der Parallaxegrenzwert ($P_{Grenz}$) entsprechend der gewählten kleineren Anzahl vergrößert wird.

**Claims**

1. Method for the passive determination of target data by directionally selective receipt of sound waves, which are radiated or transmitted by a target, with a first electroacoustic transducer arrangement of a sonar receiving system, in particular a passive panoramic system, on a carrier vehicle from estimated bearing angles, which are determined from estimated positions of the target, and measured bearing angles, wherein the bearing angle difference between measured and estimated bearing angles is minimised iteratively, **characterised by** that bearing angles ($\varphi_{fa}$) of a second electroacoustic transducer arrangement located on board the carrier vehicle installed at a known distance from the first transducer arrangement are measured, that the measured bearing angles ($\varphi_{ca}$, $\varphi_{fa}$) of both transducer arrangements, which are related to the longitudinal axis (L) of the carrier vehicle, are combined taking account of their distance (D) from one another to a bearing triangle to the target (Z) and an acute angle to the target location is determined as a parallax value (P), that the parallax value (P) is compared with a specifiable parallax limit value ($P_{Grenz}$), that from the parallax limit value ($P_{Grenz}$), the distance (D) and the measured bearing angle ($\varphi_{ca}$) of one of the two transducer arrangements a comparison distance ($R_{Grenz}$) is determined, the estimated target distance ($R_{est}$) is compared with the comparison distance ($R_{Grenz}$), that upon the parallax limit value being exceeded and the comparison distance ($R_{Grenz}$) being undercut simultaneously all target data, namely target course ($\gamma$), distance (R) to the target and target speed (v), are outputted as a target data set.

2. Method according to claim 1, **characterised by** that the parallax value (P) is determined by averaging a specifiable quantity (M) of differences of the bearings ($\varphi_{ca}$, $\varphi_{fa}$) measured by the two transducer arrangements.

3. Method according to claim 1 or 2, **characterised by** that the carrier vehicle's own position (E) is determined by a navigation system ( ), its longitudinal direction (L) by a compass ( ) and the distance (D) of the transducer arrangements is determined from their transducer local positions, wherein the transducer local positions are determined via their known installation locations with reference to the longitudinal and transverse axis, and form a basis for the specification of the target data as a target data set.

4. Method according to one or more of claims 1 to 3, **characterised by** that for the determination of the parallax limit value ($P_{Grenz}$), the scatter $\sigma\varphi_{ca}$, $\sigma\varphi_{fa}$) or standard deviation of the bearing angles ($\varphi_{ca}$, $\varphi_{fa}$) of the two transducer arrangements measured for determination of a target data set is determined, the root-extracted sum of the squares of the scatters ($\sigma\varphi_{ca}$, $\sigma\varphi_{fa}$) or standard deviations is multiplied by a factor c, preferably c=1.8, and is divided by the root-extracted number ($N_{fa}$, $N_{ca}$) of the bearing angle measurements per processing cycle to estimate a target data set and that the parallax limit value ($P_{Grenz}$) is compared with the determined parallax value (P) for the output of the target data set.

5. Method according to one or more of claims 1 to 4, **characterised by** that the distance standard deviation ($\sigma_R$) of the estimated distances ($R_{est}$) to the target (Z) is determined and compared with a specifiable stability dimension ($S_R$), that the output of the target data set is released when the stability dimension ($S_R$) is undercut.

6. Method according to claim 5, **characterised by** that a straight line is laid through a specifiable number of estimated distances ($R_{est}$) to the target (Z) and distance differences ($\Delta R$) of the estimated distances ($R_{est}$) are determined from the straight line, that from the distance differences ($\Delta R$) the distance standard deviation ($\sigma_R$) of the distance is determined.

7. Method according to one of claims 1 to 4, **characterised by** that a straight line is laid through a specifiable number of estimated distances (Rest) to the target (Z) and distance differences ($\Delta R$) of the estimated distances (Rest) are determined from the straight line and that for the output of the target data set the mean value of the distance differences ($\Delta R$) is compared with a specifiable limit value ($\Delta m$) and the output of the target data set is released when the limit value ($\Delta m$) is undercut.

8. Method according to one of claims 1 to 7, **characterised by** that the estimated distance ($R_{est}$) of the outputted target data set is compared with a specifiable minimal distance ($R_{min}$) and if the minimal distance ($R_{min}$) is undercut, a warning on account of endangerment of the boat safety is displayed.

9. Method according to one of claims 4 to 8, **characterised by** that if a specifiable threshold of the stability dimension ($S_R$) or the limit value ($\Delta m$) is undercut, the number ($N_{ca}$, $N_{fa}$) of the bearing angle measurements used for determination of the target data is reduced, wherein the parallax limit value ($P_{Grenz}$) is increased corresponding to the smaller number selected.

**Revendications**

1. Procédé de détermination passive de données cibles par réception sélective directionnelle d'ondes acoustiques qui sont émises ou diffusées par une cible, avec un premier agencement de transducteur électroacoustique d'une installation réceptrice de sonar, notamment une installation panoramique passive, sur un véhicule porteur à partir d'orientations estimées, qui sont déterminées à partir de positions estimées de la cible, et d'orientations mesurées, la différence entre les orientations étant minimisée de manière itérative entre l'orientation mesurée et l'orientation estimée, **caractérisé en ce que** les orientations ($\varphi_{fa}$) d'un deuxième agencement de transducteur électroacoustique monté à une distance connue du premier agencement de transducteur et se trouvant à bord du véhicule porteur sont mesurées, **en ce que** les orientations ($\varphi_{ca}$, $\varphi_{fa}$) mesurées des deux agencements de transducteurs par rapport à l'axe longitudinal (L) du véhicule porteur sont combinées en un triangle de relèvement par rapport à la cible (Z) en tenant compte de leur distance (D) l'un par rapport à l'autre et **en ce qu'**un angle aigu est déterminé par rapport au lieu de la cible en tant que valeur de la parallaxe (P), **en ce que** la valeur de la parallaxe (P) est comparée à une valeur limite prédéfinissable de la parallaxe ($P_{Lim}$), **en ce qu'**un éloignement comparatif ($R_{Lim}$) est calculé à partir de la valeur limite de la parallaxe ($P_{Lim}$), de la distance (D) et de l'orientation mesurée ($\varphi_{ca}$) d'un des deux agencements de transducteurs, **en ce que** l'éloignement estimé de la cible ($R_{est}$) est comparé à l'éloignement comparatif $R_{Lim}$), **en ce que** toutes les données de la cible, c'est-à-dire le cap de la cible (y), l'éloignement (R) par rapport à la cible et la vitesse de la cible (v), sont émises en tant que jeu de données de la cible si la valeur limite de la parallaxe est dépassée et si en même temps la valeur obtenue est inférieure à l'éloignement comparatif ($R_{Lim}$).

2. Procédé selon la revendication 1, **caractérisé en ce que** la valeur de la parallaxe (P) est calculée par moyennage d'une quantité (M) prédéfinissable des différences des relèvements ($\varphi_{ca}$, $\varphi_{fa}$) mesurés par les deux agencements de transducteurs.

3. Procédé selon la revendication 1 ou 2, **caractérisé en ce que** la position propre (E) du véhicule porteur est déterminée par une installation de navigation ( ), sa direction longitudinale (L) par un compas ( ) et la distance (D) des agencements de transducteurs à partir de leurs positions d'emplacement, les positions d'emplacement des transducteurs au-dessus de leurs lieux de montage connus étant calculées par rapport à l'axe longitudinal et transversal et formant la base pour l'indication des données de la cible en tant que jeu de données de la cible.

4. Procédé selon l'une quelconque des revendications 1 à 3, **caractérisé en ce que** la dispersion ($\sigma\varphi_{ca}$, $\sigma\varphi_{fa}$) ou l'écart type de l'orientation mesurée ($\varphi_{ca}$, $\varphi_{fa}$) des deux agencements de transducteurs pour déterminer un jeu de données de la cible est calculé pour déterminer la valeur limite de la parallaxe ($P_{Lim}$), **en ce que** la racine carrée de la somme des dispersions ($\sigma\varphi_{ca}$, $\sigma\varphi_{fa}$) ou des écarts types est multipliée par un facteur c, de préférence c=1,8, et divisée par la racine carrée du nombre ($N_{fa}$, $N_{ca}$) des mesures d'orientation par cycle de traitement pour évaluer un jeu de données de la cible et **en ce que** la valeur limite de la parallaxe ($P_{Lim}$) est comparée à la valeur de la parallaxe (P) calculée pour la sortie du jeu de données de la cible.

5. Procédé selon l'une quelconque des revendications 1 à 4, **caractérisé en ce que** l'écart type ($\sigma_R$) des éloignements estimés ($R_{est}$) est calculé par rapport à la cible (Z) et comparé à un taux de stabilité prédéfinissable ($S_R$) donné et **en ce que** la sortie du jeu de données de la cible est autorisée si le taux de stabilité (SR) n'est pas atteint.

6. Procédé selon la revendications 5, **caractérisé en ce qu'**une droite est définie par un nombre prédéfinissable d'éloignements estimés ($R_{est}$) par rapport à la cible (Z), **en ce que** des différences ($\Delta_R$) des éloignements estimés ($R_{est}$) sont déterminées par les droites et **en ce que** l'écart type de l'éloignement ($\sigma_R$) est déterminé à partir des différences d'éloignements ($\Delta_R$).

7. Procédé selon l'une quelconque des revendications 1 à 4, **caractérisé en ce qu'**une droite est définie par un nombre prédéfinissable des éloignements estimés ($R_{est}$) par rapport à la cible (Z), **en ce que** des différences ($\Delta_R$) des éloignements estimés ($R_{est}$) sont déterminées par les droites, **en ce que** la valeur moyenne des différences d'éloignement ($\Delta_R$) est comparée à une valeur limite prédéfinissable ($\Delta_R$) pour la sortie du jeu de données de la cible et **en ce que** la sortie du jeu de données de la cible est autorisée si la valeur limite ($\Delta_m$) n'est pas atteinte.

8. Procédé selon l'une quelconque des revendications 1 à 7, **caractérisé en ce que** l'éloignement estimé ($R_{est}$) du jeu de données de la cible sorti est comparé à un éloignement minimum prédéfinissable ($R_{min}$) et **en ce qu'**un avertissement signalant la mise en danger de la sécurité du bateau est affiché si l'éloignement minimum ($R_{min}$) n'est pas atteint.

**9.** Procédé selon l'une quelconque des revendications 4 à 8, **caractérisé en ce que** le nombre ($N_{ca}$, $N_{fa}$) des mesures d'orientation utilisées pour déterminer les données de la cible est réduit lorsque le taux de stabilité ($S_R$) ou la valeur limite ($\Delta_m$) n'est pas atteint, la valeur limite de la parallaxe ($P_{Lim}$) étant augmentée en fonction du nombre plus petit choisi.

Fig. 1

Fig. 2

Fig. 3

Fig. 4

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1410060 A
- DE 2136780
- US PS4910719 A
- DE 4341364 C2
- DE PS3446658 C